# EUROPEAN PATENT APPLICATION

(11) **EP 3 450 925 A1**
(43) Date of publication of application: **06.03.2019**
(21) Application number: 18191217.1
(22) Date of filing: 28.08.2018
(51) Int. Cl.: G01D 5/14, F16H 59/00

(54) **SENSITIVITY ENHANCED GEAR ABSOLUTE POSITION SENSOR**

(30) Priority: 29.08.2017 US 201715689911
(71) Applicant: Littelfuse, Inc., Chicago, IL 60631 (US)
(72) Inventor: Lee, Seong-Jae, Chicago, IL 60631 (US); Knapp, Stephen E., Chicago, IL 60631 (US); Fernandez, Armando, Chicago, IL 60631 (US)
(74) Representative: Duxbury, Stephen

(57) **Abstract**

A gear absolute position sensor (GAPS) is provided. A gear position sensor assembly may include a transmission shaft of a transmission, and a pair of magnets coupled to the transmission shaft. A first magnet of the pair of magnets may have a first magnetization direction, and a second magnet of the pair of magnets may have a second magnetization direction different (e.g., opposite) than the first magnetization direction. The gear position sensor may further include at least one magnetic sensor disposed adjacent the pair of magnets, the magnetic sensor capable of sensing three-dimensional motion of the pair of magnets and providing an output indicating movement, such as translation and rotation, of the transmission shaft. Each of the magnets is preferably uboid-shaped.

## Description

### Background of the Disclosure

### Field of the Disclosure

The present disclosure relates to a gear absolute position sensor (GAPS) for manual transmissions and more particularly to a gear absolute position sensor for manual transmissions using dual magnets with opposite polarity.

### Discussion of Related Art

There is a trend of automatic motor vehicle transmissions for passenger cars, sport utility vehicles, pickup trucks and other consumer vehicles to transition from substantially full hydraulic operation to operation under the control of an electronic transmission control module (TCM) and hydraulic actuators. This trend has been influenced by both the desire and necessity of providing electronic linear position sensors to provide real time data to the transmission control module regarding the current positions of the actuators, the associated shift linkages and the clutches, brakes and gears acted upon. Such data is utilized by a transmission control module to confirm, for example, the commencement and completion of a shift and thus the overall state of the transmission. Such data is also useful for self-diagnosis of impending or actual component failure.

Application of this approach to manual transmission engines has challenges, however. Since shift timing and gear selection are left to the vehicle operator, the incorporation of various sensors in a manual transmission has been viewed as unnecessary and/or as an invasion of the operator's freedom. Furthermore, current GAPS based on magnet technology offers poor resolution if rotational separation between gears is small for a smaller sized transmission package.

### Summary of the Disclosure

In view of the foregoing, what is needed is a GAPS utilizing a magnetic field profile from opposite polarity dual magnets, thus allowing large separation of signals representing gear positions at the end of forward and reverse movement of a transmission shaft. Signal(s) obtained using this approach may be more than double as compared with the signal(s) from the current GAPS based on magnet technology. As a result, smaller angular separation of gear positions can be better resolved.

One approach according to the disclosure can include a gear position sensor system having a transmission shaft of a transmission, and a pair of magnets coupled to the transmission shaft. A first magnet of the pair of magnets has a first magnetization direction, and a second magnet of the pair of magnets has a second magnetization direction, and wherein the first magnetization direction is different than the second magnetization direction. The gear position sensor system further includes at least one magnetic sensor proximate to the pair of magnets, the magnetic sensor capable of sensing three-dimensional motion of the pair of magnets and providing an output indicating rotation and translation of the transmission shaft.

Another approach can include a magnetic sensor assembly for determining movement of a transmission shaft, the assembly having a pair of cuboid-shaped magnets coupled to a transmission shaft, wherein a first magnet of the pair of magnets has a first magnetization direction, and a second magnet of the pair of magnets has a second magnetization direction, and wherein the first magnetization direction is opposite to the second magnetization direction. The magnetic sensor assembly may further include at least one magnetic sensor proximate to the pair of magnets, the magnetic sensor capable of sensing three-dimensional motion of the pair of magnets and providing an output indicating rotation and translation of the transmission shaft.

Yet another approach can may include a method for determining movement of a transmission shaft, the method including providing a pair of cuboid-shaped magnets coupled to a transmission shaft, wherein a first magnet of the pair of magnets has a first magnetization direction, and a second magnet of the pair of magnets has a second magnetization direction, and wherein the first magnetization direction is opposite to the second magnetization direction. The method may further include providing at least one magnetic sensor proximate the pair of magnets, wherein the magnetic sensor senses three-dimensional motion of the pair of magnets and provides an output indicating rotation and translation of the transmission shaft.

### Brief Description of the Drawings

The accompanying drawings illustrate exemplary approaches of the disclosed a GAPS so far devised for the practical application of the principles thereof, and in which:
**FIG. 1** is a perspective view illustrating a magnetic sensor assembly according to the disclosure;
**FIG. 2** is a side view illustrating a magnetic sensor assembly according to the disclosure;
**FIG. 3** is a perspective view illustrating a pair of magnets according to the disclosure;
**FIG. 4** is a diagram illustrating magnetic flux versus rotation for a rectangular magnet according to the disclosure;
**FIG. 5** is a diagram illustrating a signal versus rotation for a rectangular magnet according to the disclosure; and
**FIG. 6** is a flow chart of a method for determining/sensing a position of a transmission shaft according to the disclosure.

The drawings are not necessarily to scale. The drawings are merely representations, not intended to portray specific parameters of the disclosure. Furthermore, certain elements in some of the figures may be omitted, or illustrated not-to-scale, for illustrative clarity. The cross-sectional views may be in the form of "slices", or "near-sighted" cross-sectional views, omitting certain background lines otherwise visible in a "true" cross-sectional view, for illustrative clarity. Furthermore, for clarity, some reference numbers may be omitted in certain drawings.

### Description

The present disclosure will now proceed with reference to the accompanying drawings, in which various approaches are shown. It will be appreciated, however, that the unipolar sensor may be embodied in many different forms and should not be construed as limited to the approaches set forth herein. Rather, these approaches are provided so that this disclosure will be thorough and complete, and will fully convey the scope of the disclosure to those skilled in the art. In the drawings, like numbers refer to like elements throughout.

As used herein, an element or operation recited in the singular and proceeded with the word "a" or "an" should be understood as not excluding plural elements or operations, unless such exclusion is explicitly recited.

Furthermore, spatially relative terms, such as "beneath," "below," "lower," "central," "above," "upper," "proximal," "distal," and the like, may be used herein for ease of describing one element's relationship to another element(s) as illustrated in the figures. It will be understood that the spatially relative terms may encompass different orientations of the device in use or operation in addition to the orientation depicted in the figures.

As described above, the present disclosure provides a gear absolute position sensor (GAPS) assembly. The assembly can include a transmission shaft of a transmission, and a pair of magnets coupled to the transmission shaft. A first magnet of the pair of magnets may have a first magnetization direction, and a second magnet of the pair of magnets may have a second magnetization direction different (e.g., opposite) than the first magnetization direction. The assembly may further include at least one magnetic sensor disposed adjacent the pair of magnets, the magnetic sensor capable of sensing three-dimensional motion of the pair of magnets and providing an output indicating movement, such as translation and rotation, of the transmission shaft. Each of the magnets is preferably cuboid-shaped.

As a result, the disclosure provides a sensor arrangement for manual transmission using dual magnets with opposite polarity. Current GAPS based on magnet technology offers poor resolution if rotational separation between gears is small as a result of the small size of the transmission package. In response, the present disclosure utilizes a unique magnetic field profile from opposite polarity of dual magnets, thus allowing large separation of signals representing gear positions at the end of forward and reverse movement of the transmission shaft. Each of the magnets may have a rectangular shape with opposite polarity depending on a required displacement between the forward and reverse translation. The pair of magnets and the transmission shaft may be coupled together such that together they translate and rotate along an axial direction of the transmission shaft when gear position changes. The sensor senses the variation of the magnetic flux densities as the transmission shaft moves.

Various parameters may characterize the performance of the sensor. These parameters include sensitivity, which is a change in an output signal of a magnetic field sensing element in response to a change of magnetic field experienced by the magnetic sensing element, and linearity, which is a degree to which the output signal of the magnetic field sensing element varies in direct proportion to the magnetic field. These parameters may also include an offset, which is characterized by an output signal from the magnetic field sensing element not representative of a zero magnetic field when the magnetic field sensing element experiences a zero magnetic field.

According to the present disclosure, signals at forward translation and reverse translation can be well separated to avoid overlapping, and a neutral position is at the center between the positive and negative rotations, which also helps avoid overlapping between gear positions. The neutral position also can be positioned slightly off from the center between the positive and negative rotations. A signal obtained from the design is advantageously more than 2x than current GAPS approaches. Thus, a technical advantage of the present disclosure is that smaller angular separation of gear positions can be better resolved.

The present disclosure can provide a GAPS assembly that senses the absolute, current shift lever position or chosen/engaged gear of a manual transmission. The sensors may provide data to an associated electronic controller such as a sensor detector module. The sensor may comprises a 3-D Hall effect or other type of magnetic field (proximity) sensors in combination with an application specific integrated circuit (ASIC) which is supplied with data from the sensor, decodes the output of the sensors, and provides an output identifying a specific engaged gear or neutral for use by vehicle or engine management processors. The sensor is mounted proximate or directly to the transmission shaft at a location where the sensors can sense both rotation and translation.

The sensor may be utilized with four, five, six or more speed and gear ratio manual transmissions. Use of the sensor enables engine and transmission speed matching, which reduces clutch wear and provides improved shift quality. The sensor also enables engine start-stop capability as well as remote start for a manual transmission by, inter alia, detecting when the transmission is in neutral. The sensor and the application specific integrated circuit also provide full diagnostic capability.

Referring now to **FIGs**. **1-2**, a gear position sensor system (hereinafter "system"), which may include a magnetic sensor assembly, will be described in greater detail. As shown, the system 100 may include a transmission shaft 102 of a transmission, and a pair of magnets 104A-B coupled to the transmission shaft 102. The transmission shaft 102 includes a lengthwise central axis 'CA', wherein the transmission shaft 102 is able to rotate about the central axis CA and/or translate axially along the central axis CA (e.g., along the x-direction in the orientation shown). As will be described in greater detail below, a first magnet (e.g., 104A) has a first magnetization direction 'A,' and a second magnet (e.g., 104B) has a second magnetization direction 'B.' Each of the first and second magnet directions A and B are generally transverse (e.g., extend along the z-axis) to the central axis CA of the transmission shaft 102.

Although not intended to as limiting, the manual transmission may be conventional, including a housing as well as shafts, gears and synchronizer clutches (all not illustrated), which cooperatively provide, for example, four, five, six or more forward speeds or gear ratios and reverse. The transmission may include an output shaft (e.g., the transmission shaft 102), which is coupled to a final drive assembly, and which may include, for example, a prop shaft, a differential assembly and a pair of drive axles.

As further shown, the system includes at least one magnetic sensor (hereinafter "sensor") 108 disposed adjacent the pair of magnets 104A-B. The sensor(s) 108 may be capable of sensing three-dimensional (3-D) motion of the pair of magnets 104A-B and providing an output 110 indicating, for example, rotation and/or translation of the transmission shaft 102. For example, magnets 104A-B include selected characteristics such that the two or more magnetic field signals have different respective magnetic field signal values when the gear shift lever selects different ones of the plurality of gears. The sensor 108 may be a 3-D sensor for sensing a density variation in a magnetic flux 105 from the pair of magnets as the transmission shaft moves in response to gear position changes. It will be appreciated that the pair of magnets 104A-B and the sensor 108 may be mounted within a transmission housing (not shown), through the transmission housing, or at any convenient location where the magnets 104A-B may be attached to the transmission shaft 102 and the sensor 108 mounted proximately thereto.

The output can be received by a sensor detector module 112, which may include an integrated circuit (IC) 114. For example, the output 110 may include a first output indicating the transmission shaft 102 is in a first axially displaced position, and second output indicating the transmission shaft 102 is in a second axially displaced position. More specifically, the sensor detector module 112 may receive the output 110, and the IC 114 may provide a signal indicating an end of a forward movement or an end of a reverse movement of the transmission shaft 102. The sensor detector module 112 may then determine a gear position based on the signal from the IC 114 indicating the end of forward/reverse movement of the transmission shaft 102. The sensor detector module 112 can deliver a control signal 118, which may be an indication of gear position, to an associated electronic controller such as an engine control module (ECM).

The sensor(s) 108 may include one or more 3-D Hall effect sensors. As an alternative to Hall effect sensors, anisotropic magneto resistance (AMR), giant magneto resistance (GMR), permanent magnet linear contactless displacement (PLOD), linear variable displacement transformer (LVDT), magneto elastic (ME) or magneto inductive (MI) sensors may be utilized. The sensor 108 may be part of a sensor assembly including any number of application or component specific sensors, such as an electronic sensor (tachometer), which provides a signal representing the current speed of the output shaft, or a transmission input speed sensor (TISS), which senses the instantaneous speed of the input shaft of the manual transmission. The sensor assembly may also include a transmission output speed sensor (TOSS), which senses the instantaneous speed of the output shaft of the manual transmission, and/or a gear absolute shift position sensor assembly, which may include the IC 114, the data output (e.g., the control signal 118) of which indicates the current position of a shift lever. The sensor assembly may include a brake pedal position sensor, which senses the position of a brake pedal (also not illustrated).

The sensor detector module 112 may be or include a processing unit, which refers, generally, to any apparatus for performing logic operations, computational tasks, control functions, etc. A processor may include one or more subsystems, components, and/or other processors. A processor may include various logic components operable using a clock signal to latch data, advance logic states, synchronize computations and logic operations, and/or provide other timing functions. During operation, the sensor detector module 112 may receive signals transmitted over a LAN and/or a WAN (e.g., T1, T3, 56 kb, X.25), broadband connections (ISDN, Frame Relay, ATM), wireless links (802.11, Bluetooth, etc.), and so on.

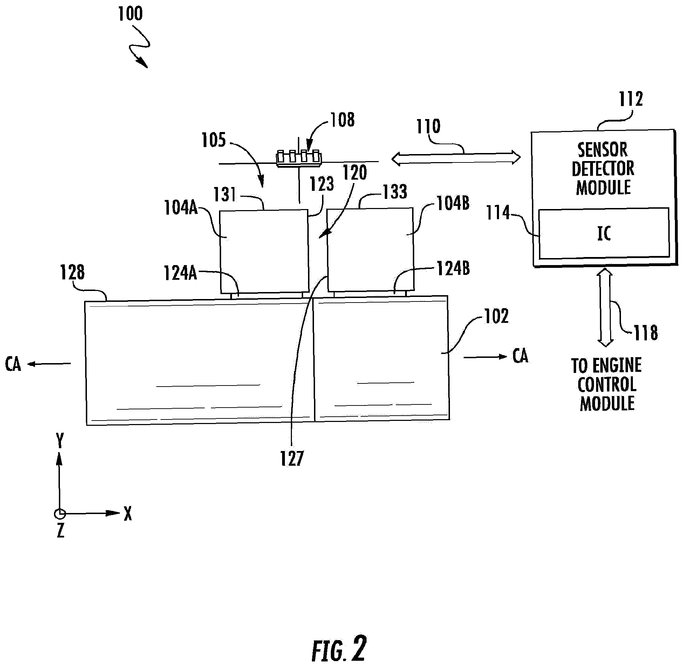

Referring now to **FIGs. 2**-**3****,** the pair of magnets 104A-B will be described in greater detail. As shown, the first magnet 104A and the second magnet 104B each have a rectangular or cuboid shape, wherein the pair of magnets 104A-B are separated by a gap 120. The magnets 104A-B may each be shaped as arc extending partially along a circumference of the transmission shaft 102. As shown, the first magnet 104A includes a first inner surface 123, while the second magnet 104B includes a second inner surface 127. The first inner surface 123 defines a plane (e.g., along the y-z directions) that is parallel to, or substantially parallel to, a plane (e.g., along the y-z directions) defined by the second inner surface 127. As further shown, a top surface 131 of the first magnet 104A may extend along a same plane (e.g., along the x-z directions) as a top surface 133 of the second magnet 104B. Although not limited to any particular material, the magnets 104A-B may be neodymium (NdFeB), samarium-cobalt (SmCo), or ceramic magnets.

The pair of magnets 104A-B may be directly coupled to the transmission shaft 102 by respective linkages 124A-B, which may include any component capable of fixing the pair of magnets 104A-B to an exterior surface 128 of the transmission shaft 102 so that the magnets 104A-B and the transmission shaft 102 move (e.g., rotate or translate) together when gear position changes. A linking component may not be present and, instead, each magnet 104A-B is directly coupled to the transmission shaft 102. As shown, the pair of magnets 104A-B extend only partially along a circumference of the exterior surface 128 of the transmission shaft 102.

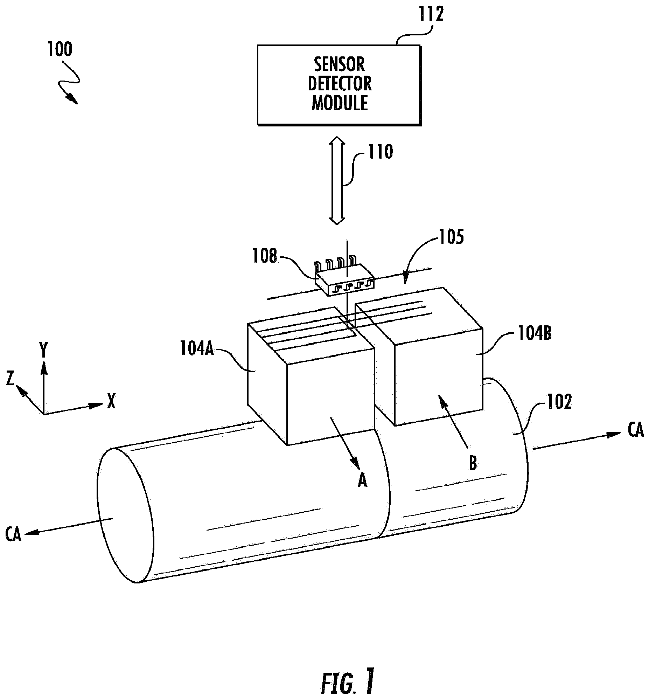

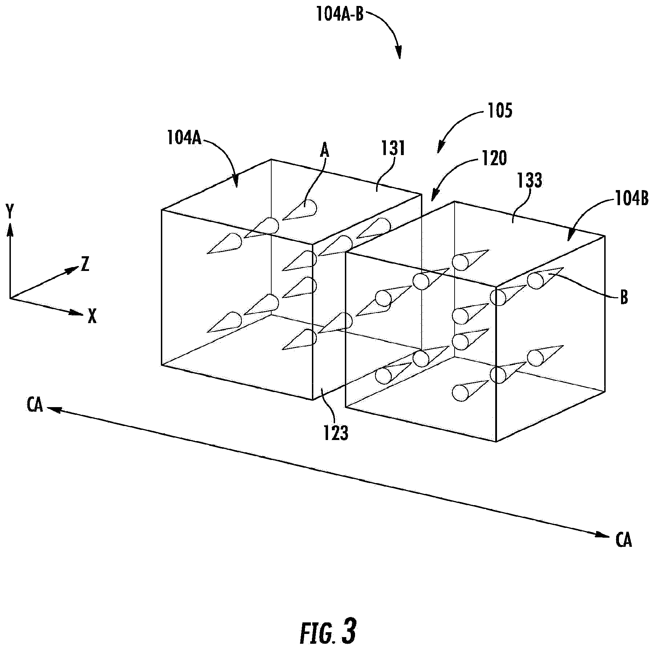

As best shown in **FIG. 3**, the first and second magnetization directions A and B, which are respectively shown as a series of cone-shaped directional arrows, are oriented directly opposite one another. In the orientation depicted, the first and second magnetization directions A and B, which correspond to magnetic polarity, point in opposite directions (+/-) along the z-direction. Said another way, the first and second magnetization directions A and B are oriented perpendicular, or substantially perpendicular, to the central axis CA, which extends lengthwise through the transmission shaft 102. As shown, the first and second magnetization directions A and B may each be linear or along the same plane over an entire height (e.g., along the y-direction) of the pair of magnets 104A-B. In other words, the first and second magnetization directions A and B extend primarily between front and back sidewalls of each of the magnets 104A-B. During use, the sensor 108 (**FIGs. 1-2**) positioned above the magnets 104A-B senses x, y, and z components of the magnetic flux 105 density. As magnetization is along the y-z plane in the orientation shown, density of the flux 105 is employed in the signal processing.

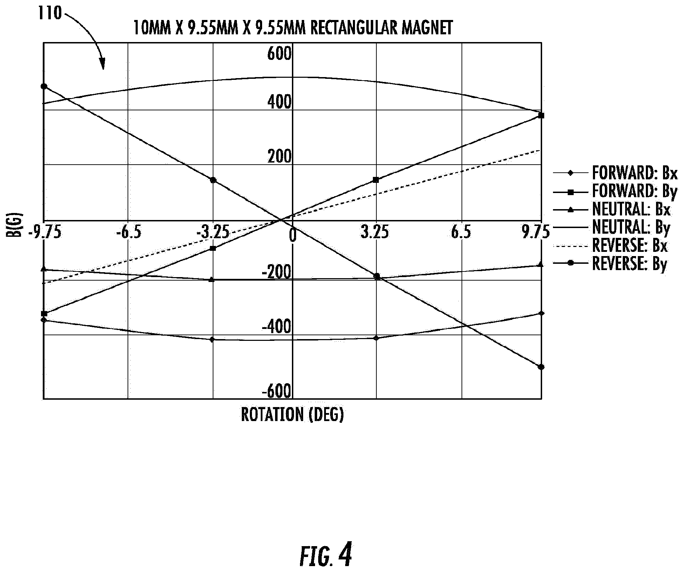

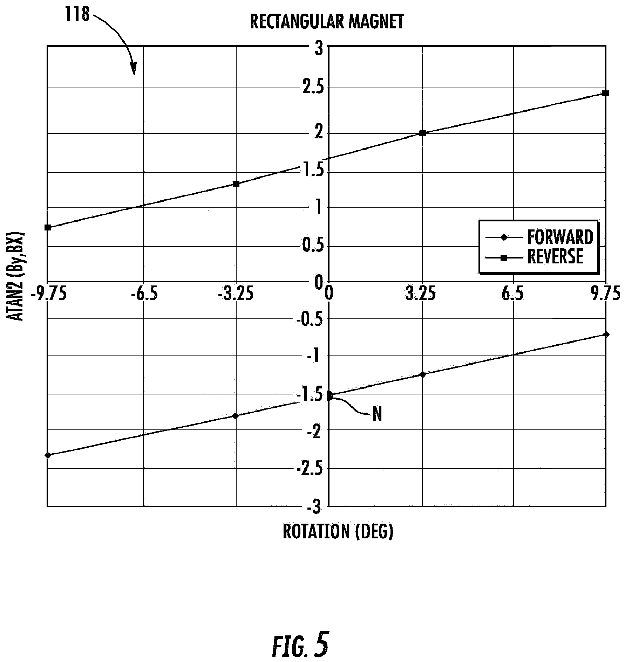

Turning now to **FIGs. 4-5**, the output 110 and the control signal 118, respectively, will be described in greater detail. **FIG. 4** demonstrates the output 110 as magnetic flux density B(G) versus rotation for a set of rectangular magnets (e.g., 10mm x 9.55mm x 9.55mm), while **FIG. 5** demonstrates the control signal 118 as a control signal variation of the signal ATAN2 as the transmission shaft 102 rotates. Bx can be an almost linear signal, while By may be comparatively flat. As a result of this character, the signal ATAN2 (By,Bx) is linear as the transmission shaft rotates from -9.75 degrees to +9.75 degrees with a step of 3.25 degrees. Signals at forward translation and reverse translation are well separated to avoid overlapping, and neutral position is at the center between the positive and negative rotations, which also helps avoid overlapping between gear positions. As a result, a signal obtained from the rectangular magnets is more than 2x current GAPS.

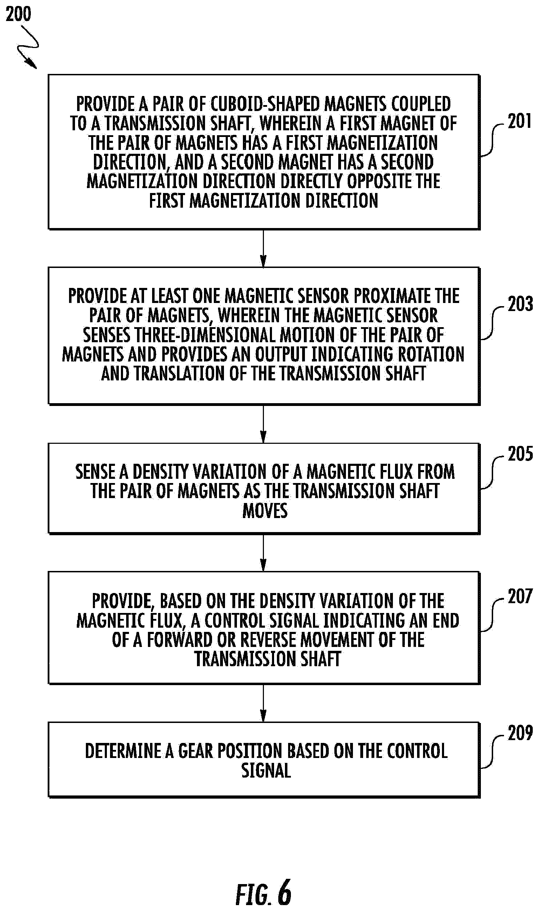

Turning now to **FIG. 6**, a method 200 for determining/sensing a position of a transmission shaft will be described in greater detail. As shown, at block 201, the method 200 includes providing a pair of cuboid-shaped magnets coupled to a transmission shaft, wherein a first magnet of the pair of magnets has a first magnetization direction (i.e., polarity), and a second magnet of the pair of magnets has a second magnetization (i.e., polarity) direction directly opposite to the first magnetization direction. The first and second magnetization directions can be oriented substantially perpendicular to a lengthwise central axis of the transmission shaft. The pair of magnets may be provided only partially along a circumference of an exterior surface of the transmission shaft.

At block 203, the method 200 may include providing at least one magnetic sensor proximate the pair of magnets, wherein the magnetic sensor senses 3-D motion of the pair of magnets and provides an output indicating rotation and translation of the transmission shaft. At block 205, the method 200 may include sensing a density variation of a magnetic flux from the pair of magnets as the transmission shaft moves. The magnetic flux density may change as the transmission shaft rotates and/or translates. At block 207, the method may include providing, based on the density variation of the magnetic flux, a control signal indicating an end of a forward movement or an end of a reverse movement of the transmission shaft. At block 209, the method 200 may include determining a gear position based on the control signal.

It should be appreciated that the disclosure described herein provide and enable several benefits and advantages. For example, the system 100 and method 200 support engine start-stop applications inasmuch as they require neutral position detection. The system 100 and method 200 improves shift quality and reduces driveline clunk by facilitating the pre-synchronization of the driveline. Additionally, matching of the speed of the engine output and transmission input, which requires absolute gear position and the anticipated gear, is possible. Torque management, which may reduce transmission mass and complexity is also possible. Remote, i.e., unattended, starting is also facilitated since it, too, requires neutral position detection. Furthermore, the system 100 and method 200 may be utilized to reduce or substantially eliminate abuse of the transmission as it may be utilized to sense and prevent a potentially abusive operational event. Finally, the system 100 and method 200 provide full diagnostic capability, for example, short to power, short to ground and open circuit.

While the present disclosure has been described with reference to certain approaches, numerous modifications, alterations and changes to the described approaches are possible without departing from the sphere and scope of the present disclosure, as defined in the appended claims. Accordingly, it is intended that the present disclosure not be limited to the described approaches, but that it has the full scope defined by the language of the following claims, and equivalents thereof.

## Claims

1. A gear position sensor system comprising:
a transmission shaft of a transmission;
a pair of magnets coupled to the transmission shaft, wherein a first magnet of the pair of magnets has a first magnetization direction, and a second magnet of the pair of magnets has a second magnetization direction, and wherein the first magnetization direction is different than the second magnetization direction; and
at least one magnetic sensor proximate to the pair of magnets, the at least one magnetic sensor capable of sensing three-dimensional motion of the pair of magnets and providing an output indicating rotation and translation of the transmission shaft.

2. The gear position sensor system of claim 1, wherein the first magnet and the second magnet each have a cuboid shape, and/or wherein the first magnetization direction is oriented directly opposite the second magnetization direction.

3. The gear position sensor system of claim 1 or 2, wherein the at least one magnetic sensor is a 3-dimensional sensor for sensing a variation in a magnetic flux density from the pair of magnets as the transmission shaft moves.

4. The gear position sensor system of any of the preceding claims further comprising a sensor detector module for receiving the output and for determining an end of a forward movement or an end of a reverse movement of the transmission shaft, preferably wherein the sensor detector module further determining a gear position based on the determination of an end of a forward movement or an end of a reverse movement of the transmission shaft.

5. The gear position sensor system of any of the preceding claims wherein the pair of magnets extend only partially along a circumference of an exterior surface of the transmission shaft, and wherein the pair of magnets are separated from one another by a gap.

6. The gear position sensor system of any of the preceding claims wherein the transmission shaft defines a central axis extending along a length of the transmission shaft, and wherein the first magnetization direction and the second magnetization direction are substantially perpendicular to the central axis.

7. The gear position sensor system of any of the preceding claims wherein the sensor is further configured to provide a first output indicating the transmission shaft is in a first axially displaced position and second output indicating the transmission shaft is in a second axially displaced position.

8. A method for determining movement of a transmission shaft, the method comprising:
providing a pair of cuboid-shaped magnets coupled to a transmission shaft, wherein a first magnet of the pair of magnets has a first magnetization direction, and a second magnet of the pair of cuboid-shaped magnets has a second magnetization direction, and wherein the first magnetization direction is opposite to the second magnetization direction; and
providing at least one magnetic sensor proximate the pair of cuboid-shaped magnets, wherein the magnetic sensor senses three-dimensional motion of the pair of magnets and provides an output indicating rotation and translation of the transmission shaft.

9. The method of claim 8, wherein the first and second magnetization directions are oriented directly opposite one another, and/or wherein the first and second magnetization directions are oriented substantially perpendicular to a lengthwise central axis of the transmission shaft.

10. The method according to claim 8 or 9, further comprising:
sensing a density variation of a magnetic flux from the pair of cuboid-shaped magnets as the transmission shaft moves;
providing, based on the density variation of the magnetic flux, a control signal indicating an end of a forward movement or an end of a reverse movement of the transmission shaft; and
determining a gear position based on the control signal.

11. The method according to any of the claims 8-10 further comprising providing a first output indicating the transmission shaft is in a first axially displaced position and second output indicating the transmission shaft is in a second axially displaced position, and/or further comprising providing the pair of cuboid-shaped magnets only partially along a circumference of an exterior surface of the transmission shaft.

12. A magnetic sensor assembly for determining movement of a transmission shaft, the magnetic sensor assembly comprising:
a pair of cuboid-shaped magnets coupled to a transmission shaft, wherein a first magnet of the pair of cuboid-shaped magnets has a first magnetization direction, and a second magnet of the pair of cuboid-shaped magnets has a second magnetization direction, and wherein the first magnetization direction is opposite to the second magnetization direction; and
at least one magnetic sensor proximate to the pair of cuboid-shaped magnets, the at least one magnetic sensor capable of sensing three-dimensional motion of the pair of cuboid-shaped magnets and providing an output indicating rotation and translation of the transmission shaft.

13. The magnetic sensor assembly of claim 12 with one or more of the following:
• wherein the first magnetization direction and the second magnetization direction are oriented substantially perpendicular to a lengthwise central axis of the transmission shaft,
• wherein the at least one magnetic sensor is a 3-dimensional sensor for sensing a variation in a magnetic flux density from the pair of cuboid-shaped magnets as the transmission shaft moves.

14. The magnetic sensor assembly of any of the claims 12-13 further comprising a sensor detector module for receiving the output and for providing a control signal indicating an end of a forward movement or an end of a reverse movement of the transmission shaft, preferably wherein the sensor detector module is configured to determine a gear position based on the control signal indicating an end of a forward movement or an end of a reverse movement of the transmission shaft.

15. The magnetic sensor assembly of any of the preceding claims 12-14 wherein the pair of cuboid-shaped magnets extend only partially along a circumference of an exterior surface of the transmission shaft.
